# EUROPEAN PATENT APPLICATION

(11) **EP 3 958 146 A1**
(43) Date of publication of application: **23.02.2022**
(21) Application number: 20891428.3
(22) Date of filing: 24.07.2020
(51) Int. Cl.: G06F 16/35

(54) **WEB CRAWLER DETECTION METHOD, SYSTEM, AND DEVICE EMPLOYING GRAPH NEURAL NETWORK**

(30) Priority: 22.06.2020 CN 202010573565
(71) Applicant: Wangsu Science & Technology Co., Ltd., Shanghai 200030 (CN)
(72) Inventor: HONG, Zhenyu, Xuhui District, Shangai 200030 (CN); HUANG, Meifen, Xuhui District, Shangai 200030 (CN)
(74) Representative: Raynor, Simon Mark
(86) International application number: PCT/CN2020/103937
(87) International publication number: WO 2021/258480

(57) **Abstract**

The present disclosure discloses a web crawler detection method, system and device based on a graph neural network. Herein, the method includes: acquiring a web session sample, the web session sample including a plurality of resources accessed (S1); extracting a resource feature of each of the plurality of resources accessed in the web session sample, the resource feature including one or more of an essential feature embodied by the resource in a website and a session feature of a user accessing the resource (S2); and building a resource graph of the web session sample based on the resource feature, and training the resource graph by using a preset graph algorithm, to detect a web crawler through a classification model (S3).

## Description

### CROSS REFERENCE TO RELATED APPLICATIONS

This disclosure claims for priority to China patent application No. 202010573565.4 entitled "WEB CRAWLER DETECTION METHOD, SYSTEM AND DEVICE BASED ON GRAPH NEURAL NETWORK" and filed on June 22, 2020 The application is incorporated by reference in its entirety.

### TECHNICAL FIELD

The present disclosure relates to the field of Internet technology, in particular to a web crawler detection method, system and device based on a graph neural network.

### BACKGROUND

With continuous development of the Internet technology, the spread of web crawlers also becomes a serious problem. According to statistics, more than half traffic of some websites are produced by the web crawlers. At present, methods in regard to detecting the web crawlers are also constantly refined. For example, traffic of a website may be analyzed through statistical features, so as to identify the web crawlers in the traffic. In addition, an access request of a user can be converted by means of a deep learning algorithm into a time sequence problem to be analyzed, thereby identifying which behavior is actually initiated by the web crawlers.

However, through an existing web crawler detection method, only data of stable time length can be analyzed; if a sequence of the data is too long, the data has to be segmented before being processed, which would undoubtedly reduce efficiency of web crawler detection.

### SUMMARY

Some embodiments of the present disclosure provide a web crawler detection method, system and device based on a graph neural network, which can improve efficiency of web crawler detection.

In order to realize the above objective, some embodiments of the present disclosure provide a web crawler detection method based on a graph neural network, the method including: acquiring a web session sample, the web session sample including a plurality of resource accessed; extracting a resource feature of each of the plurality of resources accessed in the web session sample, the resource feature including one or more of an essential feature embodied by the resource in a website and a session feature of a user accessing the resource; building a resource graph of the web session sample based on the resource feature, and training the resource graph by using a preset graph algorithm to detect a web crawler through a classification model.

In order to realize the above objective, some embodiments of the present disclosure provide a web crawler detection system based on a graph neural network including: a session sample acquiring unit configured to acquire a web session sample, the web session sample including a plurality of resource accessed; a feature extracting unit configured to extract a resource feature of each of the plurality of resource accessed in the web session sample, the resource feature including one or more of an essential feature embodied by the resource in a website and a session feature of a user accessing the resource; and a resource graph training unit configured to build a resource graph of the web session sample based on the resource feature, and train the resource graph by using a preset graph algorithm to detect a web crawler through a trained classification model.

In order to realize the above objective, some embodiments of the present disclosure provide a web crawler detection device based on a graph neural network, including a memory and a processor. The memory is configured to store a computer program. When executed by the processor, the computer program implements the above web crawler detection method based on a graph neural network.

Accordingly, the technical solutions provided in one or more embodiments of the present disclosure may be analyzed in regard to resources in a web session sample, thereby determining whether the web session sample is initiated by a web crawler. In particular, a resource feature of each resource to be analyzed may be extracted. The resource feature includes not only an essential feature in a website, but also a session feature generated when a user accesses the resource. In regard to the resource feature, the resource graph of the web session sample may be built. By performing training on the resource graph through a preset graph algorithm, a classification model based on a graph neural network may be acquired. Then, by using the classification model, a web session initiated by the web crawler may be conveniently detected. Because of use of the graph, it may be applicable to both a long text and a short text, and there is no upper or lower limit to data input to a classification model, thereby a detection efficiency of a web crawler is improved.

### BRIEF DESCRIPTION OF THE DRAWINGS

In order to more clearly illustrate the technical solutions in the embodiments of the present disclosure, the drawings required to be used in the description of embodiments are briefly introduced below, and it is obvious that the drawings in the description below are only some embodiments of the present disclosure. It is obvious for those skilled in the art to obtain other drawings based on these drawings without any creative efforts.
FIG. 1 is a flowchart of a web crawler detection method in an embodiment of the present disclosure.
FIG. 2 is a resource-only-type directed schematic diagram of an auxiliary resource being a subsidiary feature in the embodiment of the present disclosure.
FIG. 3 is a resource-only-type directed schematic diagram of the auxiliary resource being a main node in the embodiment of the present disclosure.
FIG. 4 is a resource-only-type directed schematic diagram of the auxiliary resource being a minor node in the embodiment of the present disclosure.
FIG. 5 is a resource-not-only-type directed schematic diagram of the auxiliary resource being the main node in the embodiment of the present disclosure.
FIG. 6 is a resource-not-only-type directed schematic diagram of the auxiliary resource being the subsidiary feature in the embodiment of the present disclosure.
FIG. 7 is a resource-not-only-type directed schematic diagram of the auxiliary resource being the minor node in the embodiment of the present disclosure.
FIG. 8 is a resource-not-only-type undirected schematic diagram of the auxiliary resource being the main node in the embodiment of the present disclosure.
FIG. 9 is a schematic diagram of a functional module of a web crawler detection system in an embodiment of the present disclosure.
FIG. 10 is a schematic diagram of a structure of a web crawler detection device in an embodiment of the present disclosure.

### DETAILED DESCRIPTION

To make the objective, technical solutions and advantages of the present disclosure clearer, the technical solutions of the present disclosure will be clearly and completely described below with reference to specific embodiments of the present application and accompanying drawings. It is evident that the described embodiments are only some rather than all embodiments of the present disclosure. Based on the embodiments of the present disclosure, all other embodiments obtained by a person of ordinary skill in the art without any creative effort belong to the protection scope of the present disclosure.

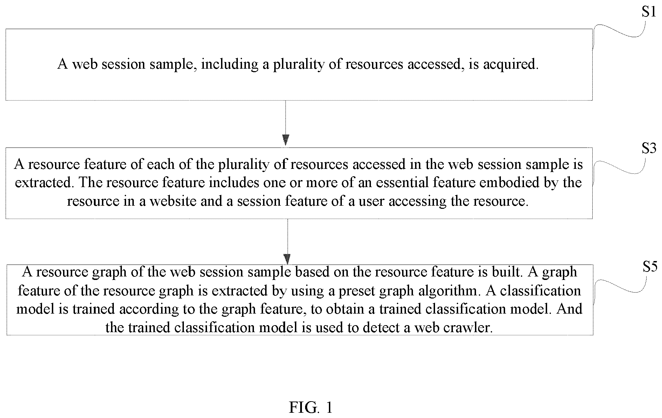

With reference to FIG. 1, an embodiment of the present disclosure relates to a web crawler detection method based on a graph neural network. The method may include the following steps.

In step S1, a web session sample, including a plurality of resources accessed, is acquired.

In this embodiment, the web session sample may be a session request initiated in regard to a website by a normal user or a web crawler. The session request may contain a series of resources. In practice, the web session sample may be acquired for an IP address to be detected. The IP address may be used by one user or more users sharing a same IP address. A web session request acquired from the IP address may be taken as a web session sample of the IP address. In addition, a range of acquiring the web session sample may be defined in another manner. For example, a web session request initiated by a particular web account may be acquired, or a web session request initiated by a designated IP address segment in a particular region may be acquired, which is not defined in the present disclosure.

In practice, different websites may have different service requirements that are concerned with different web resources. For example, some websites mainly provide static resources while some other websites mainly provide dynamic resources, and the rest websites provide both static and dynamic resources. Herein, the static and dynamic resources may be distinguished by the suffixes of their resource identifiers. For example, resources with suffixes such as aspx/jsp/php/do/asp/cgi/action/js may be taken as dynamic resources, while resources with suffixes such as exe/wmv/mp3/wma/ogg/swf may be taken as static resources. Alternatively, in some particular scenarios, there may be a pseudo-static resource. For example, a suffix like html/htm is a static resource on a conventional web page, but some dynamic pages using a pseudo-static technology also has a suffix of html/htm. Therefore a static resource and a dynamic resource may be distinguished according to an actual condition of a website.

In an embodiment, in order to reduce quantity of data to be processed, after a current web session of a target website is acquired, all candidate resources contained in the current web session may be analyzed. In the target website, a part of the candidate resources may be a popular resource related to the service requirements, while an other part of the candidate resources may be an unpopular resource not closely related to the service requirements. Here, popular target resources may be selected from candidate resources according to the service requirements of the target website, and the popular target resources may be kept in the web session sample, and the unpopular resources may be eliminated. In a subsequent resource analysis process, only the popular resource in the web session sample may be analyzed.

In practice, according to objectives of detection, classification models of varied types may be trained. For example, in some scenarios, only a web crawler of some type(s) may be detected, but an other web crawlers does not need to be detected. In this case, the web crawler requiring to be detected may be taken as a web crawler of a designated types. Then among acquired web session samples, a web session sample initiated by the web crawler of the designated type may be marked as a positive sample, and an other web session sample may be marked as a negative sample (the negative sample may include a normal access request and an other access request initiated by the web crawler). In this way, a classification model for detecting the web crawlers of the designated type may be acquired through training. However, if any ordinary web crawler needs to be detected, any web session sample initiated by a web crawler of any type may be marked as a positive sample, and a web session sample initiated by a normal user may be marked as a negative sample. In this way, a classification model for detecting the web crawler of any type may be acquired through training. It is seen that according to different types in classification models to be trained, the network session samples may be marked in different ways.

In this embodiment, through model training with multiple different web crawlers mixed, a classification model may effectively learn a relativity among the multiple different web crawlers. In this way, there may be a better detection accuracy when there are web session requests initiated by some mixed web crawlers.

In step of S3, a resource feature of each of the plurality of resources accessed in the web session sample is extracted. The resource feature includes one or more of an essential feature embodied by the resource in a website and a session feature of a user accessing the resource.

In this embodiment, after the web session sample is acquired, a resource in the web session sample may be analyzed to extract a resource feature of the resource. In practice, the resource feature may include an essential feature embodied by the resource in the website, and may further include a session feature of a user accessing the source. In particular, the essential feature may generally include a resource identifier which is a character string uniquely indicating a corresponding resource. Besides, the essential feature may further include one or more of access popularity of the resource, a content type of the resource, an information quantity of the resource and a functional attribute of the resource. The session feature may include one or more of an interval duration of accessing the resource, a resource or page stay duration, an access sequence in the web session, a change situation of user rights, and the number of resource accesses. It shall be noted that the above essential feature and session feature are possible cases exemplified to facilitate understanding the solution of the present disclosure. In practice, the essential feature and session feature may cover more cases and are not limited to the ones exemplified in the above.

In this embodiment, the resource feature may be denoted by a numerical value, and different numerical values may be of different numerical value types. In particular, numerical value types may include continuous data and discontinuous data. In regard to the continuous data, the resource feature may be standardized and normalized, for example, a standardization processing like Standard Scale may be performed on the resource feature, or a normalization processing like MinMax Scale may be performed on the resource feature. In regard to the discontinuous data, the resource feature may be converted to a feature vector. In particular, the discontinuous data may be converted to a feature vector through encoding. In practice, a common coding manner may include one-hot encoding, dummy encoding and label encoding. Herein, if the label encoding is selected, an embedded layer needs to be added after the label encoding, thereby the data after being label-encoded may be converted to a feature vector through the embedded layer. For example, when performing label encoding, the discontinuous resource feature may be label-classified by character, and each character in the discontinuous resource feature may be denoted by a corresponding label. In this way, the discontinuous resource feature may be converted to a label sequence. Thereafter, an embedded layer may be added, and each label in the label sequence may be converted to a corresponding middle vector (type vector), thereby a feature vector formed by each middle vector (type vector) may be acquired.

In step of S5, a resource graph of the web session sample based on the resource feature is built. A graph feature of the resource graph is extracted by using a preset graph algorithm. A classification model is trained according to the graph feature, to obtain a trained classification model. And the trained classification model is used to detect a web crawler.

In this embodiment, after the resource feature is extracted and the resource feature is processed according to the numerical value types, a processed resource feature may be used to build the resource graph of the web session sample. Before building the resource graph, a primary resource and an auxiliary resource may be determined in the web session sample. Herein, the primary resource and the auxiliary resource may be classified by resource popularity in a website. Alternatively, in a particular application scenario, another standard may be used to classify primary resources and auxiliary resources, which is not defined in the present disclosure. For the primary resource, a corresponding main node may be generated in a resource graph to be built. For the auxiliary resource, a content, matching an expression manner of the auxiliary resource, may be generated in the resource graph to be built according to the expression manner of the auxiliary resource.

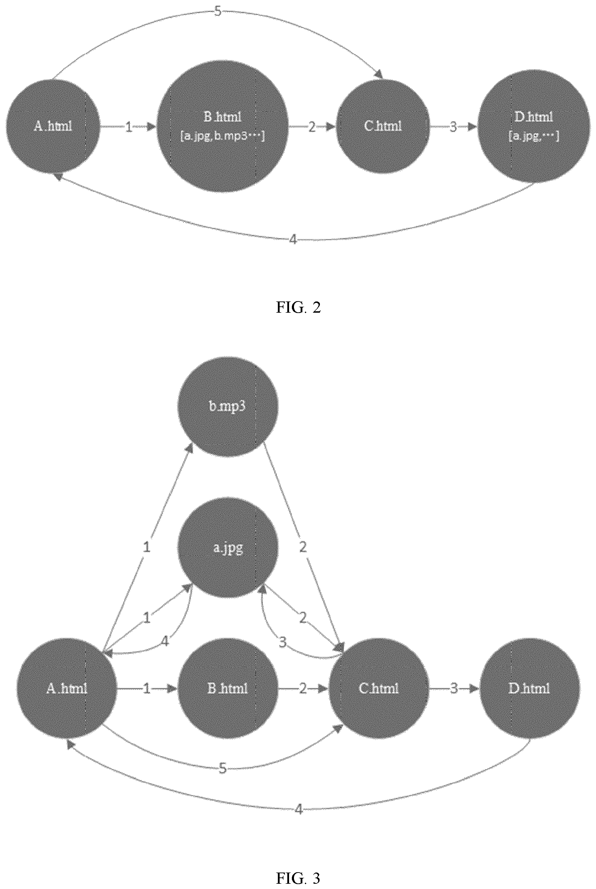

In particular, if the auxiliary resource is expressed in a subsidiary form, a primary target resource triggered simultaneously with the auxiliary resource may be determined, and a resource feature of the auxiliary resource may be taken as a subsidiary feature to be added to the main node of the primary target resource. For example, in FIG. 2, a.jpg and b.mp3 are auxiliary resources, and a primary target resource triggered simultaneously with the two auxiliary resources is B.html, then the two auxiliary resources may be taken as a subsidiary feature of the primary resource B.html, and coexist in the main node of the primary resource B.html. Similarly, in FIG. 2, a primary target resource triggered simultaneously with a.jpg is D.html, then a.jpg may be taken as a subsidiary feature to be added to the main node of the primary resource D.html.

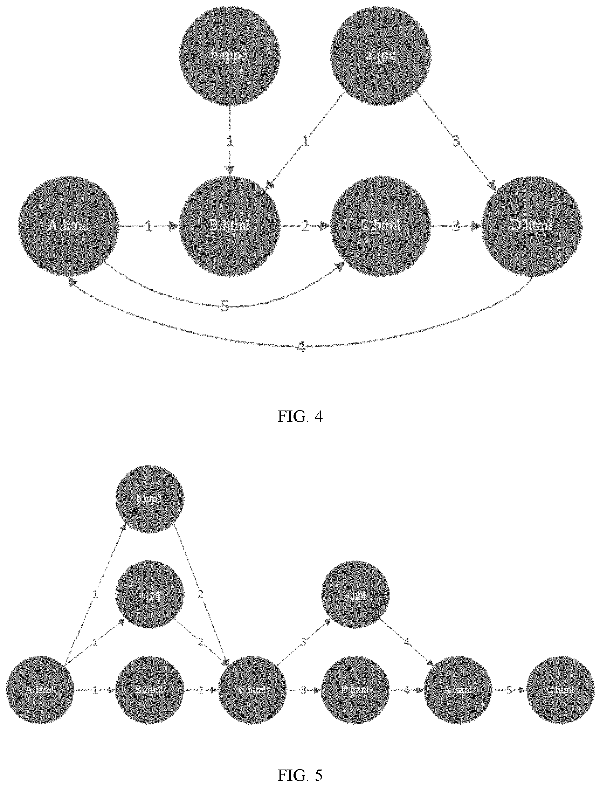

However, if the auxiliary resource is expressed in a main-node form, the auxiliary resource may be considered as a main resource, and a main node corresponding to the auxiliary resource needs to be generated. For example, in FIG. 3, both a.jpg and b.mp3 generate their corresponding main nodes. If the auxiliary resource is expressed in a minor-node form, a minor node corresponding to the auxiliary resource may be generated, and the minor node may be connected to a main node of a primary resource triggered simultaneously with the auxiliary resource. For example, in FIG. 4, both a.jpg and b.mp3 generate their corresponding minor nodes respectively. Because a.jpg and b.mp3 are triggered simultaneously with B.html, the two minor nodes both need to be connected to a main node of B.html. Besides, because a.jpg and D.html are triggered simultaneously, the minor node of a.jpg needs to be connected to the main node of D.html.

In practice, the resource graph may be of two types: a resource-only type and a resource-not-only type. Herein, in a resource graph of the resource-only type, each node represents a unique resource, and repeated resources only have a same node in the resource graph. In a resource graph of the resource-not-only type, for resources in the web session sample, a new node needs to be created whether there are repeated resources or not. In the following, a web session sample of "A.html, (B.html, a.jpg, b.mp3), C.html, (D.html, a.jpg), A.html, C.html" is taken as an example for description in regard to the two types of resource graphs. Herein, the resources within the parentheses may be considered as resources triggered simultaneously.

For the resource graph of the resource-only type, if the web session sample includes a plurality of repeated primary target resources, only one corresponding main node is generated in regard to the repeated primary target resources. For example, in the above web session sample, both A.html and C.html concern repeated accesses. However, in FIGs. 2 to 4, both A.html and C.html have one respective main node. In addition, for an auxiliary resource being a minor mode, the principle of resource uniqueness has also to be followed. For example, in FIG. 4, the auxiliary resource of a.jpg is accessed multiple times, but the auxiliary resource corresponds to only one minor node.

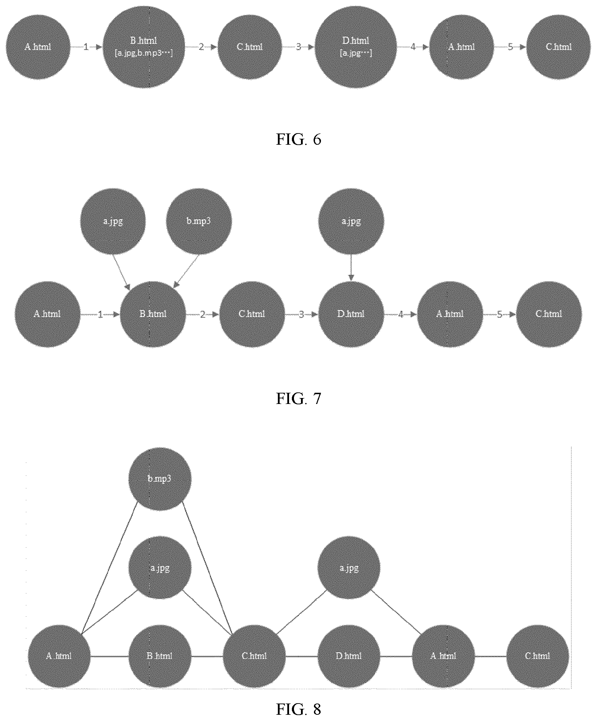

For the resource graph of the resource-not-only type, if the web session sample includes a plurality of repeated primary target resources, a corresponding main node needs to be generated in regard to each of the plurality of repeated primary target resources. For example, in FIG. 5, an auxiliary resource is also taken as a main node. As a result, because A.html, C.html and a.jpg are all accessed repeatedly, a corresponding main node needs to be generated in regard to each access. In FIG. 6, the auxiliary resource is taken as a subsidiary feature and added to the main node. Because both A.html and C.html are accessed repeatedly, a corresponding main node needs to be generated in regard to each access. For example, in FIG. 7, the auxiliary resource is taken as a minor node, because A.html, C.html and a.jpg are all accessed repeatedly, a corresponding main node or minor node need to be generated in regard to each access.

In this embodiment, for the resource graph of the resource-only type, the primary resource is unique in the resource graph to be built. Herein, the above essential feature of the primary resource may be added to the main node corresponding to the primary resource, and a session feature indicating an accumulation quantity in the session feature may be added. A reason for this way of processing is: because the resource is unique, the multiple accesses in regard to the same resource may be embodied on the same node all along. Therefore, in the node, a session feature indicating an accumulated quantity may be updated continuously. The session feature indicating the accumulated quantity may, for example, be total resource access times, total user action times within a page, and total times of unauthorized accesses. However, for the resource graph of the resource-not-only type, each access generally generates one new node, thus the nodes cannot embody a session feature of an accumulated quantity. However, each node may correspond to one access of a user, thus in the main node, apart from adding the essential feature of the primary resource, a session feature indicating a user operation behavior in the session feature may be added. The session feature indicating the user operation behavior may, for example, include an action sequence of the page, a mouse track behavior, a login behavior, a logout behavior, request-change behavior and so on. It shall be noted that if the auxiliary resource is embodied through a main node or a minor node, then in regard to the main node or minor node of the auxiliary resource, different resource features may be added according to whether the resource is unique.

In this embodiment, after each node in the resource graph are generated, a node edge may be added between nodes according to a resource access condition in the web session sample, thereby completing building the resource graph. In practice, the node edge may be a directed edge or an undirected edge. Take a first node and a second node in the resource graph as an example. If the node edge is a directed edge, when connecting the first node and the second node through the node edge, one or more directed edges may be added between the first node and the second node in order according to an access skip sequence between the first node and the second node. For example, in FIG. 3, because there are two access skip sequences (1 and 4) between A.html and a.jpg, two directed edges may be added between A.html and a.jpg. Similarly, two directed edges may be added between C.html and a.jpg. Each directed edge corresponds to only one skip process, so all skip features indicated by the directed edge between the first node and the second node may be identified, and the skip feature may be taken as an edge feature of the directed edge. Herein, the skip feature may be, for example, an interval time, an access sequence number and so on.

For the undirected edge, only one undirected edge may be added between the first node and the second node even if there are multiple skips. For example, in FIG. 8, though there are multiple skips between A.html and a.jpg, and between C.html and a.jpg, only one undirected edge may be used for connection. This is equivalent to that the former multiple directed edges are combined into one undirected edge. Because the undirected edge cannot accurately indicate a single skip process, the above skip feature cannot be taken as an edge feature of the undirected edge. In practice, if the node edge is an undirected edge, an edge feature of each directed edge between the first node and the second node may be identified, and a statistical feature corresponding to the edge feature of each directed edge may be taken as an edge feature of the undirected edge. For example, there are two directed edges between A.html and a.jpg, the two directed edges may respectively have their own edge features. Then statistical features such as an average value, a maximum value, a minimum value or a variance of the plurality of edge features may be calculated. The statistical features may be taken as edge features of the undirected edge. In addition, the edge features of the undirected edge may be acquired in regard to other statistical information in the resource graph. For example, the edge features of the undirected edge may include the number of the directed edges before the combination, a difference value between the number of the directed edges before the combination and average numbers of the directed edges between the nodes in the entire resource graph. Therefore, an edge feature of the undirected edge embodies more about a statistical feature rather than a feature of a single skip access.

In this embodiment, after the resource graph is built, the resource graph may be learned by using a preset graph algorithm and some other algorithms. It shall be noted that the resource features in the resource graph may be features after performing processing by numerical value type. In particular, the preset graph algorithm may be such algorithms as Graph Convolutional Network and GraphSAGE. Other algorithms may be, for example, Normalization, Pooling, Attention or Dropout. After feature extraction is performed by using a graph algorithm on the resource graph, the classification model may be acquired through training based on an extracted feature.

In one embodiment, a shallow feature may be extracted well through the graph algorithm. However, the graph algorithm is not able to learn a deeper feature. Therefore, in order to improve the training accuracy of the classification model, after feature extraction is performed by using the preset graph algorithm, a preset neural network algorithm may be used to perform feature extraction again on a graph feature extracted by using the preset graph algorithm, and a classification model may be acquired through training using the feature extracted again. Herein, the preset neural network algorithm may be similar or variant algorithms such as Fully Connected Layer, Convolutional Neural Network and Recurrent Neural Network. In this way, through feature extraction twice, the classification model with higher accuracy may be acquired through training.

In this embodiment, after the training of the classification model is completed, the classification model may be used to detect web crawler. In particular, in regard to the acquired web session to be detected, a resource feature of each resource in the web session to be detected may be extracted in the above manner of processing the web session sample, and the resource graph of the web session to be detected may be built based on the resource feature. Then, the classification model after the training may be used to predict the resource graph to acquire a classification result of the web session to be detected.

Accordingly, the web crawler detection method based on a graph neural network provided in the present disclosure may have preferable features of both traditional machine learning and deep learning. To express by using a graph, it may be applicable to both a long text and a short text, so that there is not upper or lower limit to input data, the web crawler detection method may have good features similar to that of deep learning, a feature may be extracted automatically and relativity between different web crawlers may be learnt easily. For the short text, a computer resource is saved and a high-level accuracy is kept because a common input data filling and other conversion manners are omitted. For the long text, there is no need to perform a cutting or segmentation operation, thereby a detection efficiency is improved. When learning a large number of different web sessions of web crawlers, relativity between attacks may be learnt, thereby a mixed attack may be better detected.

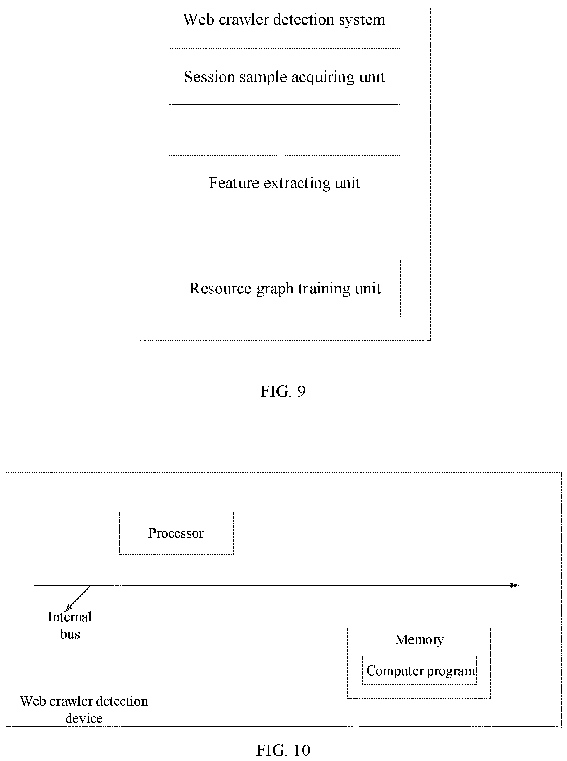

With reference to FIG. 9, the present disclosure further provides a web crawler detection system based on a graph neural network, including:
a session sample acquiring unit configured to acquire a web session sample, the web session sample including a plurality of resources accessed;
a feature extracting unit configured to extract a resource feature of each of the plurality of resources accessed in the web session sample, the resource feature including one or more of an essential feature embodied by the resource in a website and a session feature of a user accessing the resource; and
a resource graph training unit configured to build a resource graph of the web session sample based on the resource feature, and train the resource graph by using a preset graph algorithm, to detect a web crawler through a trained classification model.

With reference to FIG. 10, the present disclosure further provides a web crawler detection device based on a graph neural network including a memory and a processor. The memory is configured to store a computer program. When executed by the processor, the computer program can implement the above web crawler detection method based on the graph neural network.

In the present disclosure, the memory may include a physical device for storing information. Generally, information is digitized and then stored in an electrical, magnetic, or optical medium. The memory may further include a device that stores information with electric power, for example, an RAM or ROM; a device that stores information with magnetic power, for example, a hard disk, a floppy disk, a tape, a magnetic core memory, a bubble memory, or a U disk; a device that stores information in an optical manner, for example, a CD or DVD. Alternatively, there are other types of memories, for example, a quantum memory or graphene memory.

In the present disclosure, the processor may be implemented in any appropriate manner. For example, the processor may be a microprocessor, or may be such a computer-readable medium, a logic gate, a switch, an application specific integrated circuit (ASIC), a programmable logic controller or an embedded microcontroller as being able to store computer-readable program codes (e.g., software or hardware) executable by the (micro)processor.

Accordingly, the technical solutions provided in one or more embodiments of the present disclosure may be analyzed in regard to resources in a web session sample, thereby determining whether the web session sample is initiated by a web crawler. In particular, a resource feature of each resource to be analyzed may be extracted. The resource feature includes not only an essential feature in a website, but also a session feature generated when a user accesses the resource. In regard to the resource feature, the resource graph of the web session sample may be built. By performing training on the resource graph through a preset graph algorithm, a classification model based on a graph neural network may be acquired. Then, by using the classification model, a web session initiated by the web crawler may be conveniently detected. Because of use of the graph, it may be applicable to both a long text and a short text, and there is no upper or lower limit to data input to a classification model, thereby a detection efficiency of a web crawler is improved.

All the embodiments in the present disclosure are described in a progressive manner, identical or similar parts in the respective embodiments may refer to each other, and what is emphasized in each embodiment is a difference from other embodiments. In particular, the system and device embodiments may be described with reference to the method embodiments.

Those skilled in the art shall appreciate that the embodiments in the present disclosure may be provided as a method, a system, or a computer program product. Therefore, the present disclosure may be in a form of all hardware embodiments, all software embodiments or a combination of both software and hardware embodiments. In addition, the present disclosure may be in a form of computer program product applied to one or more computer usable storage mediums (including but not limited to a magnetic disk memory, a CD-ROM and an optical memory) having computer usable program codes.

The present disclosure is described with reference to flowcharts and/or block diagrams in accordance with the method, device (system) and a computer program product in embodiments of the present disclosure. It shall be appreciated that each process and/or block in the flowcharts and/or block diagrams, and a combination of processes and/or blocks in the flowcharts and/or block diagrams may be implemented by computer program instructions. These computer program instructions may be provided to a processor of a general-purpose computer, a special-purpose computer, an embedded processor, or other programmable data processing equipment to produce a machine, so that the instructions executed by the processor of the computer or other programmable data processing equipment generate a device that realizes functions specified in one process or multiple processes in the flowcharts and/or one block or multiple blocks in the block diagrams.

These computer program instructions may further be stored in a computer readable memory that can lead a computer or another programmable data processing device to work in a particular manner, so that instructions stored in the computer readable memory generate a product including the instruction device which realizes a function designated in one or more processes in the flowcharts and/or one or more blocks in the block diagrams.

These computer program instructions may further be loaded to a computer or another programmable data processing device, so that a series of operation steps are implemented on the computer or programmable device to generate processing realized by the computer, thereby instructions executed on the computer or another programmable device provide steps for implementing functions designated in one or multiple processes in the flowcharts and/or one or more blocks in the block diagrams.

In a typical configuration, a computer device includes one or more processors (CPU), an input/output interface, a network interface and a memory.

The memory may be a volatile memory in a computer readable medium, a random access memory (RAM) and/or a non-volatile memory, for example, a read-only memory (ROM) or a flash RAM. The memory is just an example of computer readable media.

The computer readable medium may be a nonvolatile or volatile, and removable or non-removable medium, and may realize information storage in any method or technique. Information may be a computer readable instruction, a data structure, a program module or any other data. Examples for a storage medium of a computer may include but are not limited to a Phase Change Random Access Memory (PRAM), a static random-access memory (SRAM), a dynamic random access memory (DRAM), a random access memory (RAM) of another type, a read-only memory (ROM), an electrically-erasable programmable read-only memory (EEPROM), a flash memory or other memory technology, a compact disk read-only memory (CD-ROM), a digital versatile disk (DVD) or other optical storage, magnetic cassette tape, magnetic tape storage or other magnetic storage device or any other non-transmission media that can be used to store information that can be accessed by computing devices. According to the definition in the present disclosure, a computer-readable media does not include transitory media, for example, modulated data signals and carrier waves.

It shall be noted that terms such as "comprise", "include" or any other variants are inclusive rather than exclusive. Therefore, a process, method, product or device including a series of elements not only includes these elements but also other elements not listed, or further includes elements essential to the process, method, product or device. Without more limitations, an element defined by "including a..." does not exclude other identical elements in the process, method, product or device.

The above are only embodiments of the present disclosure and are not to limit the present disclosure. For those skilled in the art, the present disclosure may include modifications and variants. Any amendment, equivalent substitution and improvement within the spirit and principle of the present disclosure shall be included in the scope of the Claims of the present disclosure.

## Claims

1. A web crawler detection method based on a graph neural network, comprising:
acquiring a web session sample, the web session sample including a plurality of resources accessed;
extracting a resource feature of each of the plurality of resources accessed in the web session sample, the resource feature including one or more of an essential feature embodied by the resource in a website and a session feature of a user accessing the resource;
building a resource graph of the web session sample based on the resource feature; and
training the resource graph by using a preset graph algorithm, to detect a web crawler through a classification model.

2. The method according to claim 1, wherein the step of acquiring the web session sample comprises:
acquiring a current web session of a target website, and analyzing candidate resources in the current web session; and
selecting a target resource from candidate resources according to a service requirement of the target website, and taking the target resource as one of the plurality of resources accessed in the web session sample.

3. The method according to claim 1, wherein the essential feature at least comprises a resource identifier and one of access popularity of the resource, a content type of the resource, an information quantity of the resource and a functional attribute of the resource; and the session feature comprises one of a resource access interval duration, a resource or page stay duration, an access sequence in the web session, a change of user rights, and the number of resource accesses.

4. The method according to claim 1 or 3, after the step of extracting the resource feature of each resource in the web session sample, further comprising:
identifying a value type of the resource feature, and standardizing and normalizing the resource feature when the value type indicates continuous data; and converting the resource feature to a feature vector when the value type indicates discontinuous data.

5. The method according to claim 4, wherein when converting the resource feature to the feature vector,
label encoding is performed on the resource feature,
an embedded layer is added after a label-encoded resource feature; and
the label-encoded resource feature is converted to a feature vector through the embedded layer.

6. The method according to claim 1, wherein the step of building the resource graph of the web session sample comprises:
determining a primary resource and an auxiliary resource in the network session sample, and generating a main node corresponding to the primary resource;
determining an expression manner of the auxiliary resource, and generating a content matching the expression manner in a resource graph to be built; and
adding a node edge to the resource graph to be built to build the resource graph of the web session sample.

7. The method according to claim 6, wherein the step of generating the main node corresponding to the primary resource comprises:
generating only one corresponding main node in regard to a plurality of repeated primary target resources when the network session sample comprises the plurality of the repeated primary target resources;
or
generating corresponding main nodes respectively in regard to each of the plurality of repeated primary target resources, when the network session sample comprises the plurality of repeated primary target resources.

8. The method according to claim 6 or 7, after the step of generating the main node corresponding to the primary resource, further comprising:
adding an essential feature of the primary resource to the main node corresponding to the primary resource and adding a session feature indicating an accumulating quantity in the session feature, when the primary resource is unique in the resource graph; and
adding the essential feature of the primary resource to the main node corresponding to the primary resource and adding a session feature indicating a user operation behavior in the session feature when the primary resource is not unique in the resource graph to be built.

9. The method according to claim 6, wherein the step of generating the content matching the expression manner comprises:
determining a primary target resource triggered simultaneously with the auxiliary resource when the auxiliary resource is expressed in a subsidiary form, and adding a resource feature of the auxiliary resource as a subsidiary feature to the main node of the primary target resource.

10. The method according to claim 6, wherein the step of generating the content matching the expression manner comprises:
generating a main node corresponding to the auxiliary resource when the auxiliary resource is expressed in a main-node form; and
generating a minor node corresponding to the auxiliary resource and connecting the minor node to a main node of a primary resource triggered simultaneously with the auxiliary resource when the auxiliary resource is expressed in a minor-node form.

11. The method according to claim 6, wherein the node edge added to the resource graph is one of a directed edge and undirected edge, and wherein when a first node and a second node are connected through the node edge:
adding one or more directed edges between the first node and the second node in order according to an access skipping sequence between the first node and the second node, when the node edge is the directed edge; and
adding only one undirected edge between the first node and the second node, when the node edge is the undirected edge.

12. The method according to claim 11, further comprising:
identifying a skipping feature between the first node and the second node indicated by the directed edge, and taking the skipping feature as an edge feature of the directed edge, when the node edge is the directed edge; and
identifying an edge feature of each directed edge between the first node and the second node, and taking a statistical feature corresponding to the edge feature of each directed edge as an edge feature of the undirected edge, when the node edge is an undirected edge.

13. The method according to claim 1, after the step of extracting the graph feature of the resource graph by using the preset graph algorithm, further comprising:
performing feature extraction again, by using a preset neural network algorithm, on a graph feature extracted through the preset graph algorithm, and acquiring a classification model trained using a re-extracted feature.

14. The method according to claim 1, further comprising:
acquiring a web session to be detected;
extracting a resource feature of each resource in the web session to be detected;
building a resource graph of the web session to be detected based on the resource feature of each resource in the web session to be detected, and
performing prediction on the resource graph of the web session to be detected using the trained classification model, to acquire a classification result of the web session to be detected.

15. A web crawler detection system based on a graph neural network, comprising:
a session sample acquiring unit, configured to acquire a web session sample, the web session sample including a plurality of resource accessed;
a feature extracting unit, configured to extract a resource feature of each of the plurality of resources accessed in the web session sample, the resource feature including one or more of an essential feature embodied by the resource in a website and a session feature of a user accessing the resource; and
a resource graph training unit, configured to build a resource graph of the web session sample based on the resource feature, and train the resource graph by using a preset graph algorithm, to detect a web crawler through a trained classification model.

16. A web crawler detection device based on a graph neural network, comprising a memory and a processor, the memory configured to store a computer program, wherein when executed by the processor, the computer program implements the method according to any one of claims 1 to 14.
